# EUROPÄISCHE PATENTSCHRIFT

(11) **EP 4 713 769 B1**
(45) Veröffentlichungstag und Bekanntmachung des Hinweises auf die Patenterteilung: **10.06.2026**
(21) Anmeldenummer: 24787097.5
(22) Anmeldetag: 07.10.2024
(51) Int. Cl.: G06F 8/65

(54) **VERFAHREN ZUM AKTUALISIEREN EINER SOFTWAREKOMPONENTE**
METHOD FOR UPDATING A SOFTWARE COMPONENT
PROCÉDÉ DE MISE À JOUR D'UN COMPOSANT LOGICIEL

(30) Priorität: 21.10.2023 DE 102023004231
(43) Veröffentlichungstag der Anmeldung: 25.03.2026
(73) Patentinhaber: Mercedes-Benz Group AG, 70372 Stuttgart (DE)
(72) Erfinder: ÖSTERLE, Edgar, 71034 Böblingen (DE); PILARSKI, Lifang, 75391 Gechingen (DE); POSTLER, Stefan, 72124 Pliezhausen (DE); HADZIMUHAREMOVIC, Samir, 71034 Böblingen (DE)
(74) Vertreter: Novagraaf Group
(86) Internationale Anmeldenummer: PCT/EP2024/078162
(87) Internationale Veröffentlichungsnummer: WO 2025/082780

(56) Entgegenhaltungen:
- CN-A- 115 499 315
- US-A1- 2019 212 997
- US-A1- 2020 174 779

## Beschreibung

Die Erfindung betrifft ein Verfahren zum Aktualisieren einer Softwarekomponente einer Recheneinheit nach der im Oberbegriff von Anspruch 1 näher definierten Art.

Mit zunehmender Digitalisierung steigt auch der Anteil von Computersystemen in Fahrzeugen. Solche Recheneinheiten übernehmen vielfältige Aufgaben, wie das Auswerten von Sensordaten, Bereitstellen von Assistenzfunktionen und Ausgeben von Steuerungsbefehlen. Dabei kann es erforderlich sein die auf einer solchen Recheneinheit ausführbare Software zu aktualisieren. Hierdurch lassen sich Fehler, bspw. in Form von "Bugs", beheben, neue Funktionen implementieren sowie Sicherheitslücken schließen.

Zum Aktualisieren einer Softwarekomponente einer fahrzeugintegrierten Recheneinheit ist es bekannt, eine solche Softwareaktualisierung beispielsweise über das Internet auf einen Desktopcomputer herunterzuladen, auf ein tragbares computerlesbares Speichermedium wie eine SD-Karte oder einen USB-Stick zu übertragen und mittels dieses Speichermediums in das Fahrzeug einzubringen. Hierzu kann das Fahrzeug entsprechende SD-Kartenslots oder USB-Anschlüsse aufweisen. Die Firmware eines Steuergeräts kann auch mittels eines Diagnosetesters unter Verwendung von Unified-Diagnostic-Services (UDS) aktualisiert werden. Nachteilig ist dabei jedoch der hohe manuelle Aufwand.

Moderne Fahrzeuge verfügen über eine Telekommunikationseinheit, mit deren Hilfe die Bordelektronik beispielsweise per Mobilfunk oder Wi-Fi kommunikativ mit dem Internet verbindbar ist. Dies ermöglicht das drahtlose Bereitstellen von Softwareaktualisierungen, auch als Over-The-Air-Update (OTA) bezeichnet. Während dem Einbringen einer Softwareaktualisierung in die Recheneinheit eines Fahrzeugs kann es zu unerwarteten Problemen kommen. Dies kann sowohl das Herunterladen der Softwareaktualisierung in das Fahrzeug, als auch die Installation der heruntergeladenen Software auf der Recheneinheit betreffen. Das Verteilen von Softwareaktualisierungen wird dabei durch eine zentrale Stelle, insbesondere in Form eines zentralen Servers oder Serververbunds, auch als Device-Management-Server (DMS) bezeichnet, verwaltet. Bei Eintreffen eines solchen Fehlers können die Fahrzeuge Fehlernachrichten an den Device-Management-Server übermitteln, sodass Entwickler der Ursache nachgehen können. So kann die Verteilung der jeweiligen Softwareaktualisierung angepasst oder auch zumindest temporär gestoppt werden. So lässt sich beispielsweise verhindern, dass eine fehlerhafte Software zu Fehlfunktionen in Fahrzeugen mit einer ganz bestimmten Konfiguration führt. Da die Fahrzeugflotten eines Fahrzeugherstellers jedoch besonders umfangreich sind und dabei eine hohe Variantenvielfalt bezüglich der individuellen Fahrzeugkonfiguration vorliegt, ist der Aufwand zur händischen Fehleranalyse jedoch enorm.

Um eine Softwareaktualisierung erfolgreich in eine Recheneinheit eines Fahrzeugs zu installieren, muss die Bordelektronik aktiv sein. Die Bordelektronik muss somit mit Energie versorgt werden. Diese Energie wird in Form von elektrischer Energie aus einer Batterie bezogen. Typischerweise wird hierzu die Starterbatterie des Fahrzeugs, also eine 12 V Autobatterie, verwendet. Insbesondere bei gealterten Batterien und kalten Außentemperaturen kann die in der Batterie noch vorhandene elektrische Energiemenge zu gering sein, um die Softwareaktualisierung vollständig zu installieren. So muss vorher überprüft werden, ob die Zeitdauer, mit der die Batterie die Bordelektronik mit Energie versorgen kann, zumindest so groß ist, wie die Installationsdauer der Softwareaktualisierung. Ist dies nicht der Fall, so darf die Softwareaktualisierung nicht installiert werden, da ansonsten das Risiko besteht, dass die Recheneinheit die der Software zugrunde liegende Funktionalität nicht mehr bereitstellen kann. Handelt es sich um eine Firmware oder ein Betriebssystem kann sogar die Gefahr bestehen, dass die Recheneinheit nicht mehr gestartet bzw. gebootet werden kann.

Entsprechend ist es üblich vor der Installation einer Softwareaktualisierung zuerst die noch verfügbare Batteriezeit, also die zur Energieversorgung der Bordelektronik noch verbleibende Zeitdauer, mit der Installationsdauer zu vergleichen und bei einer zu kurzen Batteriezeit die Installation der Softwareaktualisierung auf der Recheneinheit zu blockieren. In Abhängigkeit der Fahrzeugkonfiguration und des Zustands der einzelnen Fahrzeugkomponenten kann ein solcher "Blocker" permanent aktiv sein, sodass die Softwareaktualisierung überhaupt nicht installiert werden kann. Dies kann zur Frustration des Fahrzeugnutzers führen.

Das korrekte Vorhersagen der Batteriezeit ist dabei anspruchsvoll, da sich die Fahrzeugbatterien über die Fahrzeuge einer Fahrzeugflotte stark bezüglich ihrer Eigenschaften wie Kapazität, Alterungszustand, Hersteller und dergleichen unterscheiden. So ist es vorteilhaft die Batteriezeit konservativ anzunehmen, um ein unerwartetes Deaktivieren der Bordelektronik während der Installation einer Softwareaktualisierung aufgrund eines Energiemangels zu vermeiden. Hierdurch steigt jedoch die Anzahl blockierter Softwareaktualisierungen, was es zu vermeiden gilt.

Aus der US 2015/0007161 A1 ist ein Informationsverarbeitungsapparat sowie ein Verfahren zu dessen Steuerung bekannt. Die Druckschrift beschreibt das Installieren einer Firmwareaktualisierung auf dem Apparat unter Berücksichtigung eines Batterieladezustands einer Batterie des Apparats. Dabei wird der aktuelle Batterieladezustand mit einem vorgegebenen Schwellwert verglichen. Ist der Batterieladezustand ausreichend hoch, so kann die Firmwareaktualisierung gemäß eines ersten oder eines zweiten Vorgangs installiert werden. Ist hingegen der Batterieladezustand zu gering, so erfolgt hingegen nur eine Freigabe zum Installieren der Firmwareaktualisierung mittels des zweiten Vorgangs. Der erste Vorgang sieht das Beziehen der Firmwareaktualisierung von einem Server über das Internet vor. Der zweite Vorgang sieht das Anschließen eines weiteren Geräts an den Apparat über eine USB-Verbindung vor, wobei die Firmwareaktualisierung auf dem weiteren Gerät vorgehalten wird. Eine Entscheidung, welcher Vorgang zum Installieren der Firmwareaktualisierung freigegeben wurde, kann dabei mittels einer Hinweisnachricht an einen Nutzer ausgegeben werden.

Ferner offenbart die DE 10 2015 103 995 A1 die intelligente Fahrzeugprogrammierung mit Batterieladezustandsabschätzung. Dabei wird ein Zusammenhang auf einem Server vorgehalten, beschreibend wie viel elektrische Energie verschiedene Recheneinheiten in einem Fahrzeug zur Durchführung bestimmter Softwareupdates benötigen. Bevor ein Update auf einer Recheneinheit im Fahrzeug installiert wird, wird geprüft, ob die elektrische Energiereserve in einem Energiespeicher des Fahrzeugs entsprechend des abgeschätzten Energieverbrauchs ausreicht, um das jeweilige Update zu installieren.

Ferner offenbart die DE 10 2019 007 301 A1 ein Verfahren zum Übertragen eines Datenpakets an eine kraftfahrzeuginterne Recheneinrichtungsgruppe sowie ein Energiemanagementsystem. Dabei erfolgt die Übertragung des Datenpakets an das Fahrzeug erst dann, wenn in einem elektrischen Energiespeicher des Kraftfahrzeugs eine ausreichend hohe Energiereserve zum Verarbeiten des Datenpakets im Fahrzeug zur Verfügung steht. Dabei wird ermittelt, welche der Recheneinrichtungen der Recheneinrichtungsgruppe das Datenpaket verarbeiten soll. Der tatsächliche Energieverbrauch der respektiven Recheneinrichtungen kann mittels des maschinellen Lernens ausgewertet werden, um einen Energieschwellwert zur Verarbeitung des Datenpakets festzulegen.

Ferner offenbart die EP 2 876 553 B1 ein Programm, ein Verfahren und eine Vorrichtung zum Verarbeiten von Informationen. Dabei wird eine Aktualisierung für eine Software in einem Fahrzeug nur dann in eine Recheneinheit des Fahrzeugs eingebracht, wenn zur Installation der Aktualisierung eine ausreichende elektrische Energiereserve zum Betreiben der Recheneinheit zur Verfügung steht.

Zudem offenbart die DE 10 2015 014 049 A1 Mittel zum Einbringen eines Steuergeräte-Updates im Kraftfahrzeug. Dabei wird der Energiebedarf jeder für das Einstellen eines Konfigurationsdatensatzes benötigten Fahrzeugkomponenten prädiziert und eine in einem Energiespeicher des Kraftfahrzeugs vorhandene elektrische Energiereserve ermittelt. Ist, während das Kraftfahrzeug geparkt ist, eine ausreichend große Energiereserve vorhanden, so wird der Konfigurationsdatensatz in einem Steuergerät des Kraftfahrzeugs eingestellt.

Ferner offenbart die CN 115499315 A Mittel zur Durchführung von Over-the-Air-Update Aufgaben. Dabei werden durch eine zentrale Recheneinrichtung Informationen über die Fahrzeuge einer Fahrzeugflotte gesammelt, welche ein OTA-Update installiert haben. Die Informationen umfassen Metadaten einer Batterie des jeweiligen Fahrzeugs. Mittels der Informationen wird ein erstes Kl-Modell trainiert, welches den Energieverbrauch des Fahrzeugs zum Installieren des jeweiligen OTA-Updates abschätzt. Zudem wird ein zweites Kl-Modell trainiert, welches die degradierte Kapazität der Batterie im jeweiligen Fahrzeug abschätzt. Die beiden Kl-Modelle arbeiten in Synergie, um abschätzen zu können, ob in einem ähnlichen Fahrzeug dasselbe OTA-Update mit der in der Batterie des Fahrzeugs vorhandenen Energiemenge installierbar ist.

Ferner offenbart die US 2020/0174779 A1 das fehlerresiliente Einbringen von Over-the-Air-Updates in Fahrzeugen. Die Installation eines Updates kann dabei in Abhängigkeit von Fahrzeugzustandsbedingungen pausiert und wiederaufgenommen werden.

Zudem offenbart die US 2019/0212997 A1 ein System und Verfahren zum Aktualisieren von Fahrzeugen. Reicht die in einem elektrischen Energiespeicher eines Fahrzeugs noch verfügbare Energiemenge zum Installieren eines vollständigen Drahtlosupdates nicht aus, so kann das Drahtlosupdate teilweise installiert werden.

Der vorliegenden Erfindung liegt die Aufgabe zugrunde ein gegenüber dem Stand der Technik verbessertes Verfahren zum Aktualisieren einer Softwarekomponente einer Recheneinheit anzugeben.

Erfindungsgemäß wird diese Aufgabe durch ein Verfahren zum Aktualisieren einer Softwarekomponente einer Recheneinheit mit den Merkmalen des Anspruchs 1 gelöst. Vorteilhafte Ausgestaltungen und Weiterbildungen ergeben sich aus den hiervon abhängigen Ansprüchen.

Ein gattungsgemäßes Verfahren zum Aktualisieren einer Softwarekomponente einer Recheneinheit in Abhängigkeit einer in einem zur Versorgung der Recheneinheit genutzten elektrischen Energiespeicher vorgehaltenen elektrischen Energiereserve, wobei die Recheneinheit und der elektrische Energiespeicher in ein gemeinsames Gerät integriert sind, umfasst das Ausführen der folgenden Verfahrensschritte:
- fortwährendes Erheben von Batteriebetriebsinformationen für eine Vielzahl an Geräten;
- Übermitteln der Batteriebetriebsinformationen an eine Geräteverwaltungseinheit;
- Verteilen der Aktualisierung an zumindest eine Teilmenge der Geräte und Starten eines Installationsvorgangs der Aktualisierung auf den Geräten;
wobei erfindungsgemäß die folgenden weiteren Verfahrensschritte ausgeführt werden:
- Erheben und Übermitteln einer Aktualisierungserfolgsinformation von den Geräten an die Geräteverwaltungseinheit;
- in Bezug setzen der Aktualisierungserfolgsinformation mit zumindest den während eines Beobachtungszeitraums erhobenen Batteriebetriebsinformationen für ein jeweiliges Gerät durch die Geräteverwaltungseinheit; und
- Prädizieren der Aktualisierungserfolgsinformation für zumindest ein noch zu aktualisierendes Gerät in Abhängigkeit der Batteriebetriebsinformationen des Geräts im Beobachtungszeitraum durch die Geräteverwaltungseinheit; wobei
- die Batteriebetriebsinformationen zumindest eine aktuelle Umgebungstemperatur der Umgebung des Geräts umfassen; wobei
- für ein noch zu aktualisierendes Gerät, für welches die Geräteverwaltungseinheit eine negative Aktualisierungserfolgsinformation prädiziert, die Geräteverwaltungseinheit das Übermitteln einer Hinweisnachricht an einen Nutzer des Geräts initiiert, wobei die Hinweisnachricht eine Ursachenbeschreibung für die negative Aktualisierungserfolgsinformation und/oder einen Behebungstipp zum Erlangen einer positiven Aktualisierungserfolgsinformation umfasst; und wobei
- für das noch zu aktualisierende Gerät, für welches die Geräteverwaltungseinheit die negative Aktualisierungserfolgsinformation prädiziert, die Geräteverwaltungseinheit das Übertragen der Aktualisierung an das Gerät so lange hinauszögert, bis unter Berücksichtigung der Batteriebetriebsinformationen das Prädizieren einer positiven Aktualisierungserfolgsinformation möglich ist und die Umgebungstemperatur größer ist als ein vorgegebener Schwellwert.

Das erfindungsgemäße Verfahren sieht eine automatische computerbasierte Analyse der Batteriebetriebsinformationen einer Vielzahl an Geräten vor und ist dadurch dazu in der Lage Zusammenhänge zu erkennen, wann bzw. unter welchen Bedingungen eine jeweilige Softwarekomponente erfolgreich aktualisiert werden kann bzw. wann eine Installation der Aktualisierung fehlschlägt. Dieses Wissen wird dann zur Vorhersage genutzt, ob auf einem zu aktualisierenden Gerät eine Installation der Aktualisierung der Softwarekomponente möglich ist oder nicht.

Bei dem Gerät kann es sich zunächst einmal um eine beliebige Komponente handeln, in die die Recheneinheit und der elektrische Energiespeicher integriert sind. Beispielsweise kann es sich um ein mobiles Endgerät wie ein Smartphone, ein Internet-Of-Things (IOT) Gerät wie ein smartes Thermostatventil oder eine smarte Türklingel, ein batteriebetriebenes Werkzeug oder dergleichen handeln. Das Gerät umfasst ferner eine Schnittstelle zum Empfangen von Aktualisierungen, also eine Kommunikationsschnittstelle. Die Aktualisierung kann generell kabelgebunden, über ein tragbares computerlesbares Speichermedium oder auch über eine Drahtlosverbindung an die Recheneinheit im Gerät übermittelt werden.

Es können die unterschiedlichsten Softwarekomponenten aktualisiert werden, wie insbesondere eine Firmware, ein Betriebssystem, ein Anwendungsprogramm oder auch ein Parameterdatensatz, wie beispielsweise eine Kennlinie oder die Größe einer bestimmten Variable in einem bestimmten Betriebspunkt. Dabei können Programme als Ganzes oder auch nur Teile davon aktualisiert werden. Es kann sich also auch um ein sogenanntes Differenzupdate handeln.

Der elektrische Energiespeicher kann durch eine Primärbatterie oder auch bevorzugt einer Sekundärbatterie ausgebildet sein. Bevorzugt handelt es sich also um einen Akkumulator.

Die Batteriebetriebsinformationen werden dabei fortwährend vom Gerät erhoben. Dies bedeutet das Aufzeichnen entsprechender Batteriebetriebsinformationen zu verschiedenen Zeitpunkten, insbesondere in regelmäßigen zeitlichen Abständen oder bei Eintreten bestimmter Ereignisse. Dabei werden die Batteriebetriebsinformationen eines jeweiligen Geräts von der Geräteverwaltungseinheit für einen bestimmten zurückliegenden Beobachtungszeitraum ausgewertet. Dieser Beobachtungszeitraum kann in Abhängigkeit verschiedener Anforderungen unterschiedlich groß gewählt werden und beispielsweise einige wenige Tage oder Wochen betragen.

Bei der Geräteverwaltungseinheit handelt es sich um eine zentrale Recheneinrichtung wie einen Cloudserver oder Serverbund. Die Geräteverwaltungseinheit bietet einen zentralen Zugang zu relevanten Informationen für Entwickler.

Die Aktualisierung kann dabei an alle oder auch nur eine Teilmenge der Geräte verteilt werden. Handelt es sich bei den Geräten beispielsweise um Fahrzeuge, so kann die Aktualisierung an solche Fahrzeuge übermittelt werden, die gleiche Software- und/oder Hardwarekomponenten aufweisen. Beispielsweise wird die Aktualisierung an die Fahrzeuge einer Fahrzeugflotte übermittelt, welche vom gleichen Modell sind, die gleiche Sonderausstattung umfassen und bei der die zu aktualisierende Softwarekomponente bzw. Software auf der zur aktualisierenden Recheneinheit in einer bestimmten Programmversion vorliegt.

Die Aktualisierungserfolgsinformation umfasst zumindest einen Parameter der beschreibt, ob die Aktualisierung installiert werden konnte oder nicht. Die Aktualisierungserfolgsinformation enthält entsprechend zumindest die Information "positiv" oder "negativ". Dabei hängt der Installationserfolg, wie bereits ausgeführt, von dem Verhältnis aus Batteriezeit und Installationsdauer ab.

Die Geräteverwaltungseinheit ist dazu eingerichtet einen Zusammenhang zwischen den jeweiligen Batteriebetriebsinformationen der Geräte und den von den Geräten übermittelten Aktualisierungserfolgsinformationen zu ziehen. Insbesondere ist die Geräteverwaltungseinheit dazu in der Lage, in den entsprechenden Batteriebetriebsinformationen charakteristische Muster zu identifizieren, die die Erfolgschancen zur erfolgreichen Installation der Aktualisierung beeinflussen.

Die Geräteverwaltungseinheit ist dann dazu in der Lage, für zu aktualisierende Geräte vorherzusagen, ob eine Installation der Aktualisierung möglich ist oder nicht. Dies kann, wie im Folgenden noch näher beschrieben, nutzbringend eingesetzt werden. Beispielsweise kann das Versenden von Aktualisierungen an solche Geräte unterlassen werden, für die eine negative Aktualisierungserfolgsinformation prädiziert wird. Dies verhindert eine Frustration der Nutzer des jeweiligen Geräts und erhöht die Effizienz des Geräts, da nicht erst unnötigerweise die Aktualisierung an das Gerät übertragen werden muss, beispielsweise mittels eines Downloads, und kein unnötiger Speicherplatz in der Recheneinheit des Geräts durch die nicht installierbare Aktualisierung blockiert wird.

Der aktuelle Batterieladezustand ist ferner von der Betriebstemperatur des elektrischen Energiespeichers und damit indirekt auch von der Umgebungstemperatur des Geräts abhängig. Entsprechend gilt es die aktuelle Umgebungstemperatur zur Bewertung der Leistungsfähigkeit des elektrischen Energiespeichers zu berücksichtigen.

Wie bereits beschrieben, ist es dabei vorgesehen, dass für ein noch zu aktualisierendes Gerät, für welches die Geräteverwaltungseinheit eine negative Aktualisierungserfolgsinformation prädiziert, die Geräteverwaltungseinheit das Übermitteln einer Hinweisnachricht an einen Nutzer des Geräts initiiert, wobei die Hinweisnachricht eine Ursachenbeschreibung für die negative Aktualisierungserfolgsinformation und/oder einen Behebungstipp zum Erlangen einer positiven Aktualisierungserfolgsinformation umfasst. Hierdurch lässt sich bei einer negativen Aktualisierungserfolgsinformation eine Frustration eines Endnutzers des Geräts verhindern bzw. das Risiko hierzu abmindern. Insbesondere kann dem Nutzer hierdurch vermittelt werden, wie Abhilfe geschaffen werden kann. Dies wiederum führt dazu, dass die Aktualisierung der Softwarekomponente letztendlich erfolgreich installiert werden kann. Das Gerät kann zur Präsentation der Hinweisnachricht akustische und/oder visuelle Ausgabemittel wie Lautsprecher, Anzeigevorrichtungen und dergleichen aufweisen. Das Gerät kann auch eine Übertragung der Hinweisnachricht an eine externe Einheit, wie beispielsweise an das Smartphone oder an den E-Mailaccount des Nutzers, veranlassen. So könnte das Smartphone des Nutzers mit dem Gerät gekoppelt sein oder die E-Mailadresse des Nutzers im Gerät hinterlegt sein.

Als Ursachenbeschreibung könnte die Hinweisnachricht beispielsweise enthalten: "Der aktuelle Batterieladezustand reicht aufgrund einer Batterietemperatur von -5°C nicht zur Installation des Softwareupdates aus." Ein Behebungstipp könnte beispielsweise lauten: "Warten Sie mit der Installation des Softwareupdates bis die Batterie des Fahrzeugs eine ausreichende Betriebstemperatur angenommen hat und/oder führen Sie eine Fahrt von mindestens 150 Kilometern Länge durch."

Dabei zögert, wie bereits beschrieben, die Geräteverwaltungseinheit für ein noch zu aktualisierendes Gerät, für welches die Geräteverwaltungseinheit eine negative Aktualisierungserfolgsinformation prädiziert, das Übertragen der Aktualisierung an das Gerät so lange hinaus, bis unter Berücksichtigung der Batteriebetriebsinformationen das Prädizieren einer positiven Aktualisierungserfolgsinformation möglich ist und die Umgebungstemperatur größer ist als ein vorgegebener Schwellwert. Das Übertragen der Aktualisierung an solche Geräte, auf denen die Installation der Aktualisierung noch nicht möglich ist, ist nicht erforderlich, da ansonsten nur unnötig Speicherplatz auf dem Gerät bzw. der Recheneinheit des Geräts belegt wird. Zudem könnte hierdurch der Nutzer des Geräts frustriert werden. Es wird daher eine jeweilige Aktualisierung erst dann an das jeweilige Gerät übertragen, wenn die Aktualisierung auch zumindest in Teilen installiert werden kann. Dabei wird die Aktualisierung nicht erst dann übertragen, wenn eine positive Aktualisierungserfolgsinformation prädiziert wird, sondern zusätzlich bei einer ausreichend hohen Umgebungstemperatur.

Eine vorteilhafte Weiterbildung des erfindungsgemäßen Verfahrens sieht dabei vor, dass die Batteriebetriebsinformationen zumindest eine der folgenden weiteren Informationen umfassen:
- eine Batteriezeit, beschreibend eine erwartete verbleibende Zeitdauer bis zum Unterschreiten eines festgelegten Batterieladezustandsschwellwerts;
- einen Batteriegesundheitszustand, beschreibend einen Alterungsgrad des elektrischen Energiespeichers;
- eine Batteriekapazität; und/oder
- einen Batteriehersteller.

Bei den beschriebenen Batterieinformationen handelt es sich um besonders einflussreiche Faktoren, die sich auf den Aktualisierungserfolg auswirken können. Der zur Bestimmung der Batteriezeit berücksichtigte Batterieladezustandsschwellwert kann unterschiedlich hoch gewählt werden, beispielsweise 0%, 2%, 5%, 10% oder auch Bruchteile oder Vielfache hiervon. Der Batterieladezustand kann generell als Anteil der Gesamtkapazität des elektrischen Energiespeichers, also beispielsweise in Prozent, oder auch als absolute Energiemenge angegeben werden, beispielsweise in Form von Kilowattstunden. Aus Sicherheitsgründen kann die Bordelektronik bzw. die Elektronik des Geräts nach Unterschreiten des Batterieladezustandsschwellwerts deaktiviert werden. So kann einer übermäßigen Alterung oder Beschädigung des elektrischen Energiespeichers entgegengewirkt werden.

Es kann ein einfacher Zusammenhang zwischen dem aktuellen Batterieladezustand und der Batteriezeit existieren, beispielsweise kann bei einem verbleibenden Batterieladezustand von 40% die Batteriezeit sechs Stunden betragen. Dieser Zusammenhang kann durch Messreihen an einem Testgerät bzw. auf einem Prüfstand ermittelt werden oder auch durch Simulationen. Der Zusammenhang zwischen dem Batterieladezustand und der Batteriezeit kann somit beispielsweise in Form einer Kurve in einem Diagramm definiert sein.

Es kann auch ein komplexer Zusammenhang zwischen dem aktuellen Batterieladezustand und der Batteriezeit existieren. So kann beispielsweise der aktuelle Verbrauch bzw. Leistungsbezug der Bordelektronik bzw. der Elektronik des Geräts berücksichtigt werden. Je mehr elektrische Energie die Elektronik des Geräts aktuell verbraucht, desto schneller sinkt die Batteriezeit. Informationen, die Rückschlüsse über den aktuellen Energieverbrauch der Geräteelektronik zulassen, können dabei ebenfalls Teil der Batteriebetriebsinformationen sein.

Der Batteriegesundheitszustand lässt insbesondere Rückschlüsse darüber zu, wie stark die aktuelle Batteriekapazität gegenüber ihrem Ursprungswert abgenommen hat.

Die Leistungsfähigkeit eines elektrischen Energiespeichers mit gleichen oder ähnlichen Kenngrößen, beispielsweise der gleichen Batteriekapazität bei gleichem Gewicht und Bauraum, kann sich von Hersteller zu Hersteller unterscheiden, sodass bevorzugt auch der Batteriehersteller als Batteriebetriebsinformation berücksichtigt wird.

Entsprechend einer weiteren vorteilhaften Ausgestaltung des erfindungsgemäßen Verfahrens prädiziert die Geräteverwaltungseinheit die Aktualisierungserfolgsinformation für ein noch zu aktualisierendes Gerät mittels eines Kl-Modells, insbesondere in Form eines künstlichen neuronalen Netzes, wobei das KI-Modell in einer Trainingsphase die Aktualisierungserfolgsinformation und die Batteriebetriebsinformationen bereits aktualisierter Geräte einliest, wobei dabei die Aktualisierungserfolgsinformation als Grundwahrheit verwendet wird. Mittels des in der Trainingsphase absolvierten Trainings wird das KI-Modell dazu in die Lage versetzt, Batteriebetriebsinformationen eines jeweiligen Geräts einzulesen und daraus zuverlässig die sich einstellende Aktualisierungserfolgsinformation zu prädizieren. Als Trainingsdaten werden die Aktualisierungserfolgsinformationen und Batteriebetriebsinformationen bereits aktualisierter Geräte verwendet. Mit Hilfe künstlicher Intelligenz lassen sich dabei aus entsprechenden Datensätzen zuverlässig charakteristische Muster identifizieren und zur Vorhersage nutzen. Entsprechende Zusammenhänge müssen nicht erst von Menschen aufgefunden und definiert werden. Das Kl-Modell stellt eine Blackbox dar, die selbstständig dazu in der Lage ist, in entsprechenden Datensätzen entscheidende Zusammenhänge zu erkennen und realitätsnahe Ergebnisse zu liefern. So muss im späteren Einsatz dem KI-Modell lediglich ein Datensatz an Batteriebetriebsinformationen als Eingangsdaten bereitgestellt werden, und das Kl-Modell ist dann dazu in der Lage, zuverlässig die Aktualisierungserfolgsinformation selbst abzuschätzen. Die Trainingsphase ist beendet, wenn das KI-Modell mit ausreichender Zuverlässigkeit die Aktualisierungserfolgsinformation schätzen kann. Ein entsprechender Zielwert kann von einem Entwickler festgelegt werden und beispielsweise 80%, 90% oder 100% der Übereinstimmungswahrscheinlichkeit zwischen den vom KI-Modell prädizierten Aktualisierungserfolgsinformationen zu den tatsächlich vorliegenden Aktualisierungserfolgsinformationen bereits aktualisierter Geräte betragen.

Eine weitere vorteilhafte Ausgestaltung des erfindungsgemäßen Verfahrens sieht ferner vor, dass das Gerät von einem Fahrzeug ausgebildet wird. Das Einbringen von Aktualisierungen in die Recheneinheiten von Fahrzeugen stellt eine besondere Herausforderung dar, da Fahrzeuge zuverlässig betreibbar sein sollen. Dies bedeutet, dass ein jeweiliges Fahrzeug auch für den Transport für einen Nutzer bereitstehen muss. Ist der elektrische Energiespeicher erschöpft, kann das Fahrzeug nicht gestartet werden und dadurch auch nicht für eine Fahrt genutzt werden. Dies muss vermieden werden. Der elektrische Energiespeicher in Form einer Starterbatterie wird zudem nicht proaktiv durch einen Nutzer durch das Anschließen an eine elektrische Energieversorgung geladen, sondern typischerweise während der Fahrt mittels einer Lichtmaschine. Dies erschwert es bei einem übermäßig entladenen elektrischen Energiespeicher ausreichend elektrische Energie vorzuhalten, insbesondere wenn das jeweilige Fahrzeug meist für kurze Fahrten genutzt wird. Somit eignet sich das erfindungsgemäße Verfahren zum Aktualisieren der Softwarekomponente besonders für den Einsatz im Automotiveumfeld, da so die Zuverlässigkeit der Fahrzeuge verbessert werden kann.

Bevorzugt wird dabei der elektrische Energiespeicher von einer Starterbatterie und/oder einer Traktionsbatterie ausgebildet. Als elektrischer Energiespeicher kann also nicht nur die Starterbatterie, sondern auch bei einem Fahrzeug mit einem elektrischen Antriebsaggregat die Traktionsbatterie verwendet werden. Die Traktionsbatterie umfasst eine im Vergleich zu einer Starterbatterie größere Batteriekapazität, sodass noch mehr elektrische Energie vorgehalten werden kann. Es können auch gleichzeitig sowohl die Starterbatterie, als auch die Traktionsbatterie genutzt werden und als ein gemeinsamer elektrischer Energiespeicher erachtet werden. Dabei kann die Traktionsbatterie auch zum Wiederaufladen der Starterbatterie verwendet werden. Es kann auch elektrische Energie gleichzeitig von der Starterbatterie und der Traktionsbatterie bezogen werden.

Eine weitere vorteilhafte Ausgestaltung des erfindungsgemäßen Verfahrens sieht ferner vor, dass die Aktualisierung der Softwarekomponente drahtlos an das Gerät verteilt wird. Das Einbringen von Softwareaktualisierungen mittels Drahtlosupdate stellt den künftigen Standard zur Aktualisierung von Software im Fahrzeug dar. Viele moderne Fahrzeuge sind hierzu bereits in der Lage. Entsprechend vorteilhaft lässt sich das erfindungsgemäße Verfahren in diesem Kontext einsetzen. Somit ist ein sicherer und zuverlässiger Betrieb auch moderner Fahrzeuge sichergestellt.

Entsprechend einer weiteren vorteilhaften Ausgestaltung des erfindungsgemäßen Verfahrens, übermittelt die Geräteverwaltungseinheit für ein noch zu aktualisierendes Gerät, für welches die Geräteverwaltungseinheit eine negative Aktualisierungserfolgsinformation prädiziert, eine im Umfang reduzierte Aktualisierung, wobei die Geräteverwaltungseinheit den Umfang der reduzierten Aktualisierung so bestimmt, dass die reduzierte Aktualisierung im Gerät mit der dem elektrischen Energiespeicher des Geräts zur Verfügung stehenden Batteriezeit installierbar ist. Hierdurch kann die Zuverlässigkeit entsprechender Geräte bzw. Fahrzeuge noch weiter verbessert werden, da zumindest ein Teil zur aktualisierender Softwarekomponenten aktualisiert werden kann.

Zur Reduktion des Umfangs der Aktualisierung können einzelne Aktualisierungskomponenten aus der Aktualisierung entfernt werden. So können beispielsweise anstelle mehrerer Recheneinheiten, wie beispielsweise Steuergeräte eines Fahrzeugs, nur einige wenige oder auch nur eine einzelne Recheneinheit ein Update erhalten. Dabei könnten generell gleichzeitig mehrere Programme einer Recheneinheit aktualisiert werden. Zur Reduktion des Umfangs der Aktualisierung könnte dann die Anzahl der zu aktualisierenden Programme reduziert werden, beispielsweise auf ein zu aktualisierendes Programm. Auch könnte es möglich sein eine Aktualisierung als Differenzupdate auszubilden und so während einer Aktualisierungsiteration nur einen Teil des Programmcodes auszutauschen bzw. neu zu ergänzen. Dabei kann es sich beispielsweise um einzelne ausführbare Programmmodule handeln.

Die Installationsdauer einer Aktualisierung bzw. von Teilen einer Aktualisierung kann abgeschätzt werden, insbesondere unter Berücksichtigung der Hardware- und Softwarekonfiguration des Geräts. Besonders genau lässt sich die erwartete Installationsdauer durch ein entsprechendes Testgerät, insbesondere aufweisend die Hardware- und Softwarekonfiguration des zu aktualisierenden Geräts, abschätzen. Besonders leistungsfähige Recheneinheiten, beispielsweise durch das Aufweisen eines schnellen Prozessors, eines schnellen Grafikprozessors und/oder eine Busleitung mit hoher Datenrate sowie schnell beschreibbarem und auslesbarem Speicher, kann die Installationsdauer kürzer ausfallen als bei einer Recheneinheit mit entsprechend langsamen Hardwarekomponenten. Unter Berücksichtigung der Hardwarekonfiguration kann dann beispielsweise eine Verkürzung der Installationsdauer, gegebenenfalls jedoch einhergehend mit einer Verkürzung der Batteriezeit, bestimmt werden. So verbrauchen leistungsfähige Hardwarekomponenten auch mehr elektrische Energie.

Eine weitere vorteilhafte Ausgestaltung des erfindungsgemäßen Verfahrens sieht ferner vor, dass zusätzlich zu den Batteriebetriebsinformationen, Gerätekonfigurationsinformationen zur Bestimmung der Aktualisierungserfolgsinformation berücksichtigt werden, wobei die Gerätekonfigurationsinformationen eine Softwarekonfiguration und/oder Hardwarekonfiguration zumindest einer Recheneinheit eines jeweiligen Geräts beschreiben. Dies ermöglicht es der Geräteverwaltungseinheit noch zuverlässiger jeweilige Aktualisierungserfolgsinformationen zu prädizieren. So kann beispielsweise die Leistungsfähigkeit und auch Leistungsaufnahme jeweiliger Hardwarekomponenten die Batteriezeit sowie die Installationsdauer beeinflussen, was sich so entsprechend berücksichtigen lässt.

Weitere vorteilhafte Ausgestaltungen des erfindungsgemäßen Verfahrens zum Aktualisieren einer Softwarekomponente einer Recheneinheit ergeben sich auch aus dem Ausführungsbeispiel, welches nachfolgend unter Bezugnahme auf die Figur näher beschrieben wird.

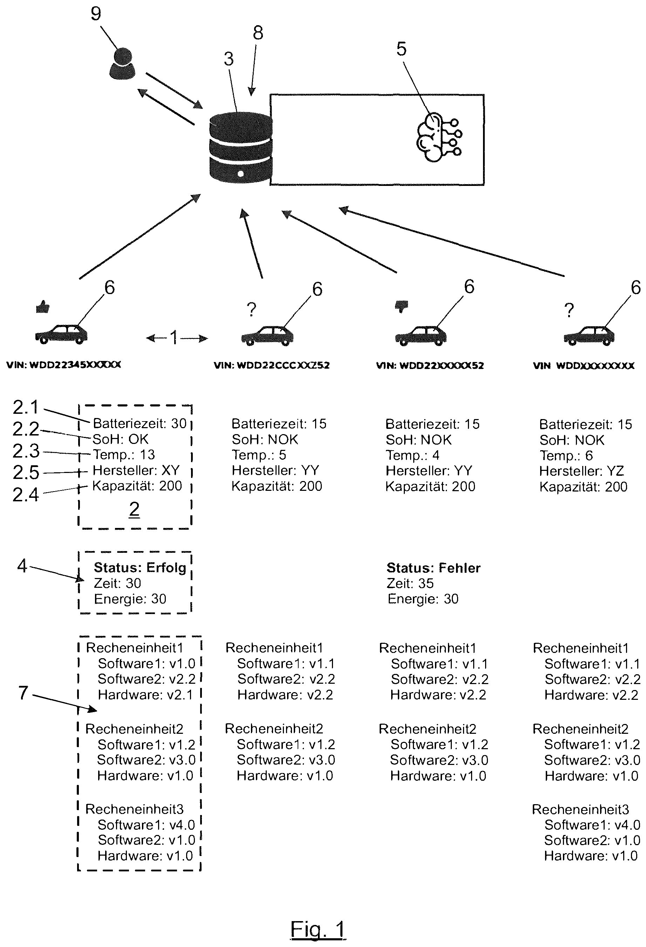

Dabei zeigt Figur 1 eine schematische Ansicht der an der Ausführung eines erfindungsgemäßen Verfahrens beteiligten Komponenten und Akteure.

Für das in Figur 1 gezeigte Ausführungsbeispiel wird angenommen, dass ein Gerät 1, umfassend eine zu aktualisierende Recheneinheit und einen elektrischen Energiespeicher, als ein Fahrzeug 6 ausgebildet ist. Eine entsprechende Aktualisierung einer Softwarekomponente einer jeweiligen Recheneinheit können die Geräte 1 dabei von einem Updateserver 8, insbesondere drahtlos, empfangen. Bei dem gezeigten Ausführungsbeispiel handelt es sich bei dem Updateserver 8 auch gleichzeitig um eine Geräteverwaltungseinheit 3. Die Geräteverwaltungseinheit 3 bzw. der Updateserver 8 wird von einem Server bzw. Serververbund ausgebildet.

Die Fahrzeuge 6 einer Fahrzeugflotte erheben während ihres Betriebs Batteriebetriebsinformationen 2. Hierzu zählt neben einer Umgebungstemperatur 2.3 des jeweiligen Geräts 3 insbesondere eine Batteriezeit 2.1, ein Batteriegesundheitszustand 2.2, auch als State-of-Health (SoH) bezeichnet, eine Batteriekapazität 2.4 und/oder ein Batteriehersteller 2.5. Zur Vereinfachung sind in der Figur dimensionslose Größen dargestellt.

Diese Batteriebetriebsinformationen 2 werden von den Geräten 1 bzw. den Fahrzeugen 6 an die Geräteverwaltungseinheit 3 übermittelt. Die Geräteverwaltungseinheit 3 analysiert die empfangenen Batteriebetriebsinformationen 2, insbesondere mit Hilfe eines Kl-Modells 5. Das Kl-Modell 5 wurde in einer Trainingsphase zur Analyse der Batteriebetriebsinformationen 2 trainiert. Dies dient dazu es der Geräteverwaltungseinheit 3 zu ermöglichen, eine Aktualisierungserfolgsinformation 4 vorhersagen, welche beschreibt, ob eine jeweilige Aktualisierung unter Berücksichtigung von Installationsdauer und Batteriezeit 2.1 auf einem jeweiligen Gerät 1 installierbar ist oder nicht. In der Trainingsphase wurden dem KI-Modell die Batteriebetriebsinformationen 2 und die sich jeweils auf dem Gerät 1 einstellende Aktualisierungserfolgsinformation 4 als Eingangsdaten bereitgestellt. Dabei bildet die Aktualisierungserfolgsinformation 4 die Grundwahrheit aus.

Die Aktualisierungserfolgsinformation 4 kann neben den Einträgen "positiv" und "negativ" bzw. "Erfolg" und "Fehler", auch weitere Informationen umfassen, wie beispielsweise die sich tatsächlich einstellende Installationsdauer und die dabei von der Geräteelektronik verbrauchte elektrische Energiemenge.

Als indirektes Maß für die Batteriezeit 2.1 kann also auch die mittels der Aktualisierungserfolgsinformation 4 übermittelte verbrauchte elektrische Energiemenge zu dem aktuellen Batterieladezustand des elektrischen Energiespeichers des Geräts 1 in Relation gesetzt werden. Dies erlaubt es abzuschätzen, ob eine Installation der Aktualisierung der Softwarekomponente möglich ist oder nicht.

Die Geräte 1 bzw. die Fahrzeuge 6 der Fahrzeugflotte übermitteln entsprechende Batteriebetriebsinformationen 2 an die Geräteverwaltungseinheit 3, welche dort analysiert werden. Soll eine Softwarekomponente einer auf einer Recheneinheit eines solchen Geräts 1 ausführbaren Software aktualisiert werden, so werden die während eines Beobachtungszeitraums für dieses Gerät 1 erhobenen Batteriebetriebsinformationen 2 ausgewertet. Dies ermöglicht es die Aktualisierungserfolgsinformationen 4 abzuschätzen.

Die von der Geräteverwaltungseinheit 3 ausgewerteten Daten bzw. die berechneten Ergebnisse können dabei von einem Entwickler 9 eingesehen werden. Dies ermöglicht es während dem Ausrollen von Aktualisierungen Maßnahmen frühzeitig zu treffen, um die Verteilung der Aktualisierung an die Geräte 1 zuverlässig zu ermöglichen, sollte es zu Fehlern kommen.

In Figur 1 über den Fahrzeugen 6 sind Fragezeichen bzw. eine Hand mit einem Daumen nach oben oder nach unten gezeigt. Eine Hand mit einem Daumen nach oben bedeutet, dass hier die Installation der Aktualisierung auf der Recheneinheit des Fahrzeugs 6 erfolgreich durchgeführt werden konnte. Eine Hand mit einem Daumen nach unten bedeutet, dass hier keine erfolgreiche Installation der Aktualisierung möglich war. Die beiden Fahrzeuge 6 mit entsprechend zugeordneten Fragezeichen deuten Geräte 1 an, für die die Geräteverwaltungseinheit 3 noch keine Aktualisierungserfolgsinformation 4 prädiziert hat. Es handelt sich somit um Geräte 1, die noch aktualisiert werden müssen.

Ergänzend zu den Batteriebetriebsinformationen 2 kann die Geräteverwaltungseinheit 3 Gerätekonfigurationsinformationen 7 des jeweiligen Geräts 1 zum Prädizieren der Aktualisierungserfolgsinformation 4 berücksichtigen. Entsprechend werden solche Gerätekonfigurationsinformationen 7 in der Trainingsphase zum Trainieren des Kl-Modells 5 als Eingangsdaten bereitgestellt. Die Gerätekonfigurationsinnformation 7 beschreibt dabei die Hardwarekonfiguration und/oder Softwarekonfiguration einer jeweiligen Recheneinheit eines jeweiligen Geräts 1.

Es können verschiedene Reaktionen in Abhängigkeit des Ergebnisses einer prädizierten Aktualisierungserfolgsinformation 4 getroffen werden. So ist es möglich eine im Umfang reduzierte Aktualisierung an ein jeweiliges Gerät 1 zu übermitteln. So kann innerhalb der zur Verfügung stehenden Batteriezeit 2.1 zumindest ein Teil der Softwarekomponente aktualisiert werden. Erfindungsgemäß werden Hinweisnachrichten an einen nicht näher dargestellten Nutzer des Geräts 1 ausgegeben, welche eine Ursachenbeschreibung und/oder einen Behebungstipp zum Erlangen einer positiven Aktualisierungsinformation 4 beinhalten. Auch wird erfindungsgemäß die Verteilung von Aktualisierungen an solche Geräte 1 verhindert, für die keine positive, sondern nur eine negative Aktualisierungserfolgsinformation 4 durch die Geräteverwaltungseinheit 3 prädiziert wird. Dies kann einer Frustration des Nutzers des Geräts 1 entgegenwirken.

## Patentansprüche

1. Verfahren zum Aktualisieren einer Softwarekomponente einer Recheneinheit in Abhängigkeit einer in einem zur Versorgung der Recheneinheit genutzten elektrischen Energiespeicher vorgehaltenen elektrischen Energiereserve, wobei die Recheneinheit und der elektrische Energiespeicher in ein gemeinsames Gerät (1) integriert sind,
umfassend die folgenden Verfahrensschritte:
- Fortwährendes Erheben von Batteriebetriebsinformationen (2) für eine Vielzahl an Geräten (1);
- Übermitteln der Batteriebetriebsinformationen (2) an eine Geräteverwaltungseinheit (3);
- Verteilen der Aktualisierung an zumindest eine Teilmenge der Geräte (1) und Starten eines Installationsvorgangs der Aktualisierung auf den Geräten (1);
**gekennzeichnet durch** die folgenden weiteren Verfahrensschritte:
- Erheben und Übermitteln einer Aktualisierungserfolgsinformation (4) von den Geräten (1) an die Geräteverwaltungseinheit (3);
- In Bezug setzen der Aktualisierungserfolgsinformation (4) mit zumindest den während eines Beobachtungszeitraums erhobenen Batteriebetriebsinformationen (2) für ein jeweiliges Gerät (1) durch die Geräteverwaltungseinheit (3); und
- Prädizieren der Aktualisierungserfolgsinformation (4) für zumindest ein noch zu aktualisierendes Gerät (1) in Abhängigkeit der Batteriebetriebsinformationen (2) des Geräts (1) im Beobachtungszeitraum durch die Geräteverwaltungseinheit (3); wobei
- die Batteriebetriebsinformationen (2) zumindest eine aktuelle Umgebungstemperatur (2.3) der Umgebung des Geräts umfassen; wobei
- für ein noch zu aktualisierendes Gerät (1) für welches die Geräteverwaltungseinheit (3) eine negative Aktualisierungserfolgsinformation (4) prädiziert, die Geräteverwaltungseinheit (3) das Übermitteln einer Hinweisnachricht an einen Nutzer des Geräts (1) initiiert, wobei die Hinweisnachricht eine Ursachenbeschreibung für die negative Aktualisierungserfolgsinformation (4) und/oder einen Behebungstipp zum Erlangen einer positiven Aktualisierungserfolgsinformation (4) umfasst; und wobei
- für das noch zu aktualisierendes Gerät (1) für welches die Geräteverwaltungseinheit (3) die negative Aktualisierungserfolgsinformation (4) prädiziert, die Geräteverwaltungseinheit (3) das Übertragen der Aktualisierung an das Gerät (1) so lange hinauszögert, bis unter Berücksichtigung der Batteriebetriebsinformationen (2) das Prädizieren einer positiven Aktualisierungserfolgsinformation (4) möglich ist und die Umgebungstemperatur (2.3) größer ist als ein vorgegebener Schwellwert.

2. Verfahren nach Anspruch 1,
**dadurch gekennzeichnet, dass**
die Batteriebetriebsinformationen (2) zumindest eine der folgenden weiteren Informationen umfassen:
- eine Batteriezeit (2.1), beschreibend eine erwartete verbleibende Zeitdauer bis zum Unterschreiten eines festgelegten Batterieladezustandsschwellwerts;
- einen Batteriegesundheitszustand (2.2), beschreibend einen Alterungsgrad des elektrischen Energiespeichers;
- eine Batteriekapazität (2.4); und/oder
- einen Batteriehersteller (2.5).

3. Verfahren nach Anspruch 1 oder 2,
**dadurch gekennzeichnet, dass**
die Geräteverwaltungseinheit (3) die Aktualisierungserfolgsinformation (4) für ein noch zu aktualisierendes Gerät (1) mittels eines Kl-Modells (5) prädiziert, insbesondere in Form eines künstlichen neuronalen Netzes, wobei das Kl-Modell (5) in einer Trainingsphase die Aktualisierungserfolgsinformation (4) und die Batteriebetriebsinformationen (2) bereits aktualisierter Geräte (1) einliest, wobei dabei die Aktualisierungserfolgsinformation (4) als Grundwahrheit verwendet wird.

4. Verfahren nach einem der Ansprüche 1 bis 3,
**dadurch gekennzeichnet, dass**
das Gerät (1) von einem Fahrzeug (6) ausgebildet wird.

5. Verfahren nach Anspruch 4,
**dadurch gekennzeichnet, dass**
der elektrische Energiespeicher von einer Starterbatterie und/oder einer Traktionsbatterie ausgebildet wird.

6. Verfahren nach einem der Ansprüche 1 bis 5,
**dadurch gekennzeichnet, dass**
die Aktualisierung der Softwarekomponente drahtlos an das Gerät (1) verteilt wird.

7. Verfahren nach einem der Ansprüche 2 bis 6,
**dadurch gekennzeichnet, dass**
für ein noch zu aktualisierendes Gerät (1) für welches die Geräteverwaltungseinheit (3) eine negative Aktualisierungserfolgsinformation (4) prädiziert, die Geräteverwaltungseinheit (3) eine im Umfang reduzierte Aktualisierung übermittelt, wobei die Geräteverwaltungseinheit (3) den Umfang der reduzierten Aktualisierung so bestimmt, dass die reduzierte Aktualisierung im Gerät (1) mit der dem elektrischen Energiespeicher des Geräts (1) zur Verfügung stehenden Batteriezeit (2.1) installierbar ist.

8. Verfahren nach einem der Ansprüche 1 bis 7,
**dadurch gekennzeichnet, dass**
zusätzlich zu den Batteriebetriebsinformationen (2), Gerätekonfigurationsinformationen (7) zur Bestimmung der Aktualisierungserfolgsinformation (4) berücksichtigt werden, wobei die Gerätekonfigurationsinformationen (7) eine Softwarekonfiguration und/oder Hardwarekonfiguration zumindest einer Recheneinheit eines jeweiligen Geräts (1) beschreiben.

## Claims

1. Method for updating a software component of a computing unit depending on an electrical energy reserve provided in an electrical energy store used to supply the computing unit, wherein the computing unit and the electrical energy store are integrated into a common device (1), which method comprises the following method steps:
- continuously collecting battery operating information (2) for a large number of devices (1);
- transmitting the battery operating information (2) to a device management unit (3);
- distributing the update to at least a subset of the devices (1) and starting an installation process of the update on the devices (1);
**characterized by** the following further method steps:
- collecting and transmitting update success information (4) from the devices (1) to the device management unit (3);
- correlating, by means of the device management unit (3), the update success information (4) with at least the battery operating information (2) for a relevant device (1) collected during an observation period; and
- predicting, by means of the device management unit (3), the update success information (4) for at least one device (1) that is still to be updated, depending on the battery operating information (2) of the device (1) during the observation period; wherein
- the battery operating information (2) comprises at least a current ambient temperature (2.3) of the surroundings of the device; wherein,
- for a device (1) that is still to be updated, for which the device management unit (3) predicts negative update success information (4), the device management unit (3) initiates the transmission of a notification message to a user of the device (1), wherein the notification message includes a cause description for the negative update success information (4) and/or a correction tip for obtaining positive update success information (4); and wherein
- for the device (1) that is still to be updated, for which the device management unit (3) predicts the negative update success information (4), the device management unit (3) delays the transmission of the update to the device (1) until, taking into account the battery operating information (2), it is possible to predict positive update success information (4) and the ambient temperature (2.3) is greater than a specified threshold value.

2. Method according to claim 1,
**characterized in that**
the battery operating information (2) includes at least one of the following further pieces of information:
- a battery time (2.1), describing an expected remaining amount of time until a battery charging status falls below a specified battery charging status threshold value;
- a battery health status (2.2), describing a degree of aging of the electrical energy store;
- a battery capacity (2.4); and/or
- a battery manufacturer (2.5).

3. Method according to claim 1 or 2,
**characterized in that**
the device management unit (3) predicts, by means of an AI model (5), the update success information (4) for a device (1) that is still to be updated, which AI model is in particular in the form of an artificial neural network, wherein, during a training phase, the AI model (5) reads in the update success information (4) and the battery operating information (2) of already updated devices (1), wherein the update success information (4) is used as a ground truth.

4. Method according to any of claims 1 to 3,
**characterized in that**
the device (1) is formed by a vehicle (6).

5. Method according to claim 4,
**characterized in that**
the electrical energy store is formed by a starting battery and/or a traction battery.

6. Method according to any of claims 1 to 5,
**characterized in that**
the update of the software components is distributed wirelessly to the device (1).

7. Method according to any of claims 2 to 6,
**characterized in that**
for a device (1) that is still to be updated, for which the device management unit (3) predicts negative update success information (4), the device management unit (3) transmits a reduced-scope update, wherein the device management unit (3) determines the scope of the reduced update such that the reduced update can be installed in the device (1) within the battery time (2.1) available to the electrical energy store of the device (1).

8. Method according to any of claims 1 to 7,
**characterized in that**
in addition to the battery operating information (2), device configuration information (7) is taken into account to determine the update success information (4), wherein the device configuration information (7) describes a software configuration and/or hardware configuration of at least one computing unit of a relevant device (1).

## Revendications

1. Procédé pour mettre à jour un composant logiciel d'une unité de calcul en fonction d'une réserve d'énergie électrique conservée dans un accumulateur d'énergie électrique utilisé pour l'alimentation de l'unité de calcul, dans lequel l'unité de calcul et l'accumulateur d'énergie électrique sont intégrés dans un appareil (1) commun, comprenant les étapes de procédé suivantes :
- collecte continue d'informations de fonctionnement de batterie (2) pour une pluralité d'appareils (1) ;
- transmission des informations de fonctionnement de batterie (2) à une unité de gestion d'appareil (3) ;
- distribution de la mise à jour à au moins un sous-ensemble des appareils (1) et démarrage d'une procédure d'installation de la mise à jour sur les appareils (1) ;
**caractérisé par** les étapes de procédé supplémentaires suivantes :
- collecte et transmission d'une information de réussite de mise à jour (4) des appareils (1) à l'unité de gestion d'appareil (3) ;
- mise en relation, par l'unité de gestion d'appareil (3), de l'information de réussite de mise à jour (4) avec au moins les informations de fonctionnement de batterie (2) collectées pendant une période d'observation pour un appareil (1) respectif ; et
- prédiction, par l'unité de gestion d'appareil (3), de l'information de réussite de mise à jour (4) pour au moins un appareil (1) restant à mettre à jour en fonction des informations de fonctionnement de batterie (2) de l'appareil (1) dans la période d'observation ; dans lequel
- les informations de fonctionnement de batterie (2) comprennent au moins une température ambiante (2.3) actuelle de l'environnement de l'appareil ; dans lequel
- pour un appareil (1) restant à mettre à jour pour lequel l'unité de gestion d'appareil (3) prédit une information de réussite de mise à jour (4) négative, l'unité de gestion d'appareil (3) lance la transmission d'un message d'indication à un utilisateur de l'appareil (1), dans lequel le message d'indication comprend une description de cause de l'information de réussite de mise à jour (4) négative et/ou un conseil de réparation pour obtenir une information de réussite de mise à jour (4) positive ; et dans lequel
- pour l'appareil (1) restant à mettre à jour pour lequel l'unité de gestion d'appareil (3) prédit l'information de réussite de mise à jour (4) négative, l'unité de gestion d'appareil (3) retarde la transmission de la mise à jour à l'appareil (1) jusqu'à ce que, en tenant compte des informations de fonctionnement de batterie (2), la prédiction d'une information de réussite de mise à jour (4) positive soit possible et que la température ambiante (2.3) soit supérieure à une valeur seuil prédéfinie.

2. Procédé selon la revendication 1,
**caractérisé en ce que**
les informations de fonctionnement de batterie (2) comprennent au moins l'une des informations supplémentaires suivantes :
- un temps de batterie (2.1), décrivant une durée restante attendue avant de passer en dessous d'un seuil d'état de charge de batterie établi ;
- un état de santé de batterie (2.2), décrivant un degré de vieillissement de l'accumulateur d'énergie électrique ;
- une capacité de batterie (2.4) ; et/ou
- un fabricant de batterie (2.5).

3. Procédé selon la revendication 1 ou 2,
**caractérisé en ce que**
l'unité de gestion d'appareil (3) prédit l'information de réussite de mise à jour (4) pour un appareil (1) encore à mettre à jour par le biais d'un modèle d'IA (5), en particulier sous la forme d'un réseau neuronal artificiel, dans lequel le modèle d'IA (5) lit dans une phase d'entraînement l'information de réussite de mise à jour (4) et les informations de fonctionnement de batterie (2) d'appareils (1) déjà mis à jour, dans lequel l'information de réussite de mise à jour (4) est alors utilisée comme vérité de base.

4. Procédé selon l'une des revendications 1 à 3,
**caractérisé en ce que**
l'appareil (1) est formé par un véhicule (6).

5. Procédé selon la revendication 4,
**caractérisé en ce que**
l'accumulateur d'énergie électrique est formé par une batterie de démarreur et/ou une batterie de traction.

6. Procédé selon l'une des revendications 1 à 5,
**caractérisé en ce que**
la mise à jour du composant logiciel est distribuée sans fil à l'appareil (1).

7. Procédé selon l'une des revendications 2 à 6,
**caractérisé en ce que**
pour un appareil (1) restant à mettre à jour pour lequel l'unité de gestion d'appareil (3) prédit une information de réussite de mise à jour (4) négative, l'unité de gestion d'appareil (3) transmet une mise à jour réduite en étendue, dans lequel l'unité de gestion d'appareil (3) détermine l'étendue de la mise à jour réduite de telle sorte que la mise à jour réduite peut être installée dans l'appareil (1) avec le temps de batterie (2.1) disponible pour l'accumulateur d'énergie électrique de l'appareil (1).

8. Procédé selon l'une des revendications 1 à 7,
**caractérisé en ce que**
en plus des informations de fonctionnement de batterie (2), des informations de configuration d'appareil (7) sont prises en compte pour déterminer l'information de réussite de mise à jour (4), dans lequel les informations de configuration d'appareil (7) décrivent une configuration logicielle et/ou une configuration matérielle d'au moins une unité de calcul d'un appareil (1) respectif.
